# EUROPEAN PATENT APPLICATION

(11) **EP 4 650 116 A2**
(43) Date of publication of application: **19.11.2025**
(21) Application number: 25176644.0
(22) Date of filing: 15.05.2025
(51) Int. Cl.: B25J 5/00, B25J 9/02, B25J 11/00, B25J 19/02

(54) **SYSTEM, METHOD, AND ROBOT FOR AUTOMATED SERVER HANDLING**

(30) Priority: 17.05.2024 US 202418667715
(71) Applicant: Google LLC, Mountain View, CA 94043 (US)
(72) Inventor: PANGA, Avinash, Mountain View, California, 94043 (US); EVANS, Dave Anthony, Mountain View, California, 94043 (US); XU, Toby, Mountain View, California, 94043 (US); TIRBHAWANDAT, Randy, Mountain View, California, 94043 (US)
(74) Representative: Betten & Resch

(57) **Abstract**

Aspects of the disclosure provide a mobile robot for automated server handling. The robot includes a shelf holding a plurality of server trays and a telescoping server loading tray. The telescoping server loading tray extends externally from the robot and retracts internally inside the robot. The telescoping server loading tray also includes an end having one or more locking and unlocking latches configured to engage a server tray. Aspects of the disclosure provide for determining coordinates using a position verification tool, which can be provided to the mobile robot for identifying locations of racks with target server trays.

## Description

### BACKGROUND

Server maintenance and server handling is a vital aspect of datacenter infrastructure. Datacenters use over hundreds of thousands of servers. The servers are deployed in rack systems of racks each holding a number of servers. Preserving datacenter efficiency requires regular server handling. Typically, server handling requires human intervention to extract and disconnect a server, repair the server, and replace and reconnect the server. Servers requiring maintenance are generally removed from the rack location and taken to a staging area for repairs. This process results in operator toil and decreased ergonomics, particularly in hyperscale datacenters housing a large number of servers.

### BRIEF SUMMARY

Aspects of the disclosure are related to a robot for automated server handling, a system for automated server handling, and a method for automated server handling. The robot includes a server storage shelf, a telescoping server loading tray, a cable handler, and one or more positioning sensors or cameras. The robot extracts and replaces multiple target server trays from server racks in a datacenter. The robot is configured to navigate to a target server location, identify the target server tray relative to other server trays on a rack and extract the target server tray for replacement or repair.

One aspect of the disclosure is directed to a mobile robot for automated server handling. The robot comprises a server shelf configured to hold a plurality of server trays and a telescoping server loading tray configured to extend externally from the robot and retract internally inside the server shelf. The telescoping server loading tray includes an end with one or more unlocking and locking latches positioned on the end of the telescoping server loading tray. The unlocking and locking latches are configured to engage a server tray.

The mobile robot may further comprise a distance sensor, a camera, and one or more processors, wherein the one or more processors are configured to receive data from the distance sensor and the camera and cause the telescoping server loading tray to align a position of the telescoping server loading tray relative to a server tray in a server rack in a Z direction.

The telescoping server loading tray is fixed to a first axis and the telescoping server loading tray is configured to linearly translate along the first axis within the mobile robot in a Z direction.

The mobile robot may further comprise a cable handler, the cable handler having a first axis and a second axis. The cable handler includes a plate fixed to the first axis and the second axis having a gripper adjacent to an edge of the plate. The plate is configured to align to a position of a server tray in a server rack, the plate being moveable in a Z direction. The plate is configured to extend towards the server rack in a Y direction and retract inwards towards the mobile robot in the Y direction. The mobile robot is configured to disconnect, using the cable handler, one or more connectors connected to a server.

The mobile robot may further comprise a telescoping server loading tray having a rotatable conveyor belt and a motor configured to linearly translate the server tray.

Another aspect of the disclosure is directed to a system for automated server handling comprising a server rack housing a plurality of server trays, a mobile robot, a telescoping server loading tray, and one or more processors. The mobile robot includes a server shelf configured to house server trays. The telescoping server loading tray is adjacent to the server shelf, the telescoping server loading tray having one or more locking and unlocking latches on an end of the telescoping server loading tray. The mobile robot is configured to: receive, by the one or more processors, data indicating a location of the server rack; navigate, by the mobile robot, to the location; unload, using the telescoping server loading tray, a server tray of the plurality of server trays; and load, using the telescoping server loading tray, the server tray into the server shelf.

The system may further comprise a cable handler, the cable handler having a first axis and a second axis. The cable handler includes a plate fixed to the first axis and the second axis having a gripper adjacent to an edge of the plate. The plate is configured to align to a position of a server tray in a server rack, the plate being moveable in a Z direction. The plate is configured to extend towards the server rack in a Y direction and retract inwards towards the mobile robot in the Y direction. The mobile robot is configured to disconnect, using the cable handler, one or more connectors connected to a server.

The robot may have sensors and a camera configured to determine a position for unloading the server tray relative to the server rack.

The system may further comprise a position verification tool configured to determine coordinates of the server rack, wherein the mobile robot is further configured to receive the coordinates and navigate to the coordinates. The position verification tool comprises a first laser, a second laser, and a laser shield. The coordinates are determined by the position verification tool using a plurality of reference points. Aspects of the disclosure further provide for determining coordinates using the position verification tool, which can be provided to the mobile robot for identifying locations of racks with target server trays.

Yet another aspect of the disclosure is directed to a method for automated server handling comprising loading, by a mobile robot, a first server tray onto a server shelf located within the mobile robot; extracting, by the mobile robot, a second server tray from a server rack using a telescoping server loading tray to support the second server tray; retracting, by the telescoping server loading tray, the second server tray onto the server shelf of the robot; and inserting, by the telescoping server loading tray, the first server tray into the server rack.

The method may further comprise removing, by the mobile robot, cables from the second server tray in the server rack using a gripper located on a cable handler of the mobile robot; and inserting, by the mobile robot, the cables into the first server tray by the gripper. The cable handler translates linearly in an YZ direction using a first axis and a second axis.

The method may further comprise navigating, by the mobile robot, to the server rack; and aligning, by the mobile robot, the telescoping server loading tray of the mobile robot relative to the server rack using a sensor. The sensor comprises one or more of a distance sensor, a camera, or a laser.

The method may further comprise identifying a second server tray location before extraction from the server rack. The mobile robot is secured to at least one of the first server tray or the second server tray using an unlocking and locking latch located on an end of the telescoping server loading tray.

The method may further comprise identifying, by one or more processors, a server rack location before extraction. Identifying the server rack location further comprises determining, by the one or more processors, coordinates relative to a first reference point, a second reference point, and a third reference point.

### BRIEF DESCRIPTION OF THE DRAWINGS

Fig. 1 is a perspective view of an example mobile robot, according to aspects of the disclosure.
Fig. 2 is a front view of the example mobile robot of Fig. 1, according to aspects of the disclosure.
Fig. 3 is another perspective view of the example mobile robot of Fig. 1 engaging a server tray, according to aspects of the disclosure.
Fig. 4 is a perspective view of another example mobile robot, according to aspects of the disclosure.
Fig. 5 is a perspective view of a telescoping server loading tray of the example mobile robot of Fig. 4, according to aspects of the disclosure.
Fig. 6 is a perspective view of another example mobile robot, according to aspects of the disclosure.
Fig. 7 is a perspective view of the example mobile robot of Fig. 6, according to aspects of the disclosure.
Fig. 8 is a perspective view of a telescoping server loading tray of the mobile robot of Fig. 6, according to aspects of the disclosure.
Fig. 9 is a perspective view of a server storage shelf of the mobile robot of Fig. 6, according to aspects of the disclosure.
Fig. 10A is a perspective view of an example position verification tool, according to aspects of the disclosure.
Fig. 10B is a perspective view of an aligning laser of the position verification tool of Fig. 10A, according to aspects of the disclosure.
Fig. 11 is a diagram illustrating a measurement window of the example position verification tool, according to aspects of the disclosure.
Fig. 12 is a diagram illustrating a datacenter sectioned for use with the position verification tool of Fig. 10A, according to aspects of the disclosure.
Fig. 13 is a block diagram of an example system for automated server handling, according to aspects of the disclosure.
Fig. 14 is a flowchart of an example method for automated server handling, according to aspects of the disclosure.
Fig. 15 is a flowchart of an example method for position verification of a server rack, according to aspects of the disclosure.
Fig. 16 is a flowchart of an example method for identifying a server location, according to aspects of the present disclosure.

### DETAILED DESCRIPTION

### Overview

Aspects of the present disclosure provide an automated process for server handling in a datacenter and a robot used to automate swapping, removing, or inserting server trays at a datacenter. The robot can load multiple server trays onto itself, and transport the server trays to a different location, for example to a central staging area. The server trays can be serviced or repaired, for example by an operator or another robot, at a central staging area, instead of having multiple staging areas spread across different rack locations of a datacenter. The robot stores multiple replacement server trays to switch out with target server trays or to place new server trays on racks. In some examples, the robot may be used for facilitating the swap of server trays due for upgrade.

A server tray is a receptacle that may be slotted or inserted into a rack. A server tray may house a number of electronic components, such as servers. The tray is removably coupled to the rack, for example using tracks, rails, or clips. In some examples servers or other devices may sit on open shelves of racks, and the mobile robot is configured to manipulate servers directly on racks that do not implement removable trays. In other examples, the mobile robot is configured to manipulate server trays which may be integrated with a server.

The robot can handle and manipulate server trays, such as server trays deployed in rack systems, which may house servers of different configurations, for example 2 open unit servers or 4 open unit servers. A unit can refer to a processing or memory device forming a part of the server. Some datacenters, including hyperscale datacenters, deploy a mix of different types of servers. The robot is configured to hold the weight of multiple different types of servers or other devices, which can range, for example, from 80 to 150 pounds. To that end, the robot provides for more efficient use of a data center floorplan, at least because a central staging area can be used over strategically placed individual staging areas for accounting for heavy equipment that must be moved from rack to station.

Aspects of the disclosure provide for a mobile robot configured to navigate and identify target server trays for replacement. A system can provide for position verification of different servers in a datacenter. The robot can receive coordinates for a target server tray, navigate to that server tray, and be further configured to identify the target server tray, for example using a camera. The datacenter can be mapped with coordinates of various components, e.g., racks, shelves, and/or servers. In addition to using the mapping for providing for automated server handling as described herein, the mapping can be used in other examples, such as for supporting other automated systems for modeling and maintaining a datacenter.

As part of performing automated server handling, the mobile robot is configured to identify which rack the server tray that requires maintenance is located on. The mobile robot can receive coordinate information indicating the location of a rack within a datacenter. A position verification tool can be used to determine coordinate information for rack locations, as described in more detail herein under the section *"Position Verification Tool."* The position verification tool includes a laser measurement tool having the ability to measure a rack location with reference to a datacenter aisle. The tool uses a fixed reference point, such as concrete pads of a server rack aisle, to provide a repeatable and accurate process for obtaining coordinate information, which allows a mobile robot to verify the location of different racks within a datacenter floor. Data collected by the position verification tool can be uploaded and stored, to be later retrieved and used by the robot to determine a general position of a rack for a target server tray. Coordinate information obtained using the position verification tool can also be used for other purposes, such as creating a digital twin of the datacenter, or tagging measurements taken by sensors throughout the datacenter at respective racks whose location is identified by the coordinate information. Because datacenter specifications vary from location to location, aspects of the disclosure provide for a repeatable and accurate process and tool for obtaining coordinate information.

The mobile robot is configured to receive coordinate information and navigate to a rack indicated by the received coordinates. The robot can identify the target server tray, e.g., a tray identified as requiring maintenance, upgrading, or removal, using a rack modeling tool. The rack modeling tool may include a machine learning system, e.g., a machine learning model, or an internal vision system implemented by the mobile robot. In some examples, the robot may include processors and memory storing a preprogrammed model or diagram of the rack. The preprogrammed model may include information regarding the server tray spacing and positioning within the rack allowing the robot to identify server trays using relative coordinates. In other examples, the robot may utilize machine learning to identify the server tray position in relation to the data center aisles, calculating how far the server tray is from the position data retrieved from the position verification tool. This rack modeling tool is described in further detail below under the section *"Rack Modeling Tool."*

After the robot has identified the position of the target server tray, the robot is configured to adjust its location relative to the target server tray before beginning the server tray extraction and replacement process. The robot includes various distance sensors and a camera which allow the robot to identify the target server tray and to adjust the immediate position of the robot in front of the rack relative to the target server tray. The localized positioning capabilities of the mobile robot are described in further detail below under the section *"Mobile Robot for Automated Server Handling."*

### Mobile Robot for Automated Server Handling

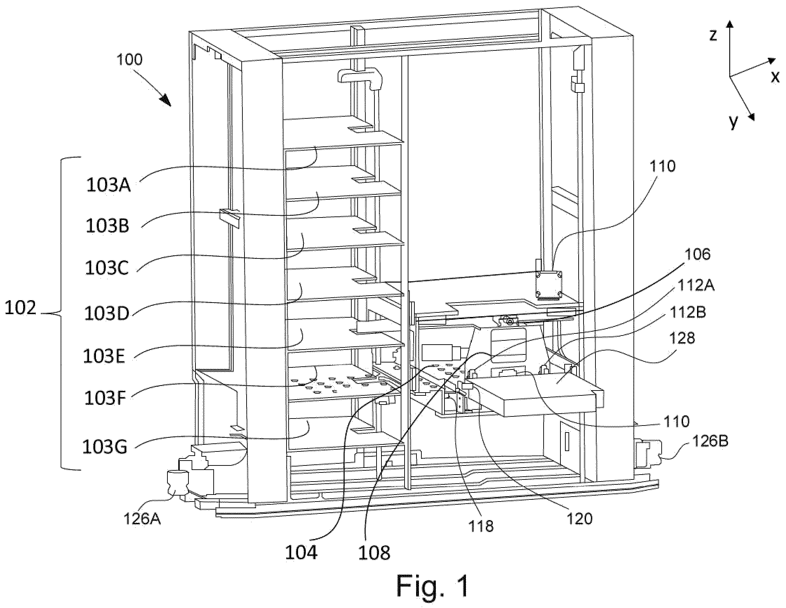

Aspects of the present disclosure relate to a mobile robot 100 for automated server handling, as shown in Fig. 1. The robot 100 includes a server storage shelf 102, a cable handler 106, a telescoping server loading tray 104.

Fig. 1 is a perspective view of an example mobile robot 100, according to aspects of the disclosure. As shown in Fig. 1, the mobile robot 100 includes a server storage shelf 102, a telescoping server loading tray 104, and a cable handler 106. The telescoping server loading tray 104 has an extension unit, for example a telescoping extender 118 as well as an unlocking and locking latch 120 on an end of the telescoping server loading tray 104. The telescoping server loading tray 104 can be mounted or coupled to the telescoping extender 118. The telescoping extender 118 is configured to extend the entire telescoping serving loading tray 104 externally from the mobile robot 100 towards a server rack. For example, the telescoping extender 118 can be implemented, for example, as one or more rails or members that may be slidably received into one another, extending or retracting to cause the entire telescoping server loading tray 104 to move in a direction parallel to the direction of the telescoping extender 118 when extended or retracted. The telescoping extender 118 can be moved using various different mechanisms, such as motors, pistons, pneumatic or hydraulic mechanisms, and so on.

The robot 100 includes a storage shelf 102 having a plurality of shelves 103A-103G within the robot 100. In some examples, the shelves 103A-103G are positioned internally on one end of the robot 100. In some examples, the shelves 103A-103G extend the width of the robot 100 in the Y direction. The robot 100 may store new server trays on the storage shelf 102, place new server trays on the rack, and extract server trays from the rack. After placing server trays, the robot 100 can return to the staging area to retrieve the next batch of server trays and drop off the extracted server trays. In some examples, the robot may load server trays onto empty racks. In other examples, the robot 100 can extract and replace target server trays. The robot may hold a number of server trays on the storage shelf at a time. The shelves 103A-103G are spaced so as to allow multiple server tray sizes to fit on each individual shelf.

The robot 100 may include a cable handler 106 having a first axis and a second axis. The cable handler includes a plate 108 fixed to the first axis. The plate 108 may include one or more plug grippers 112A, 112B adjacent to an edge of the plate 108. In some examples, the plate 108 may have a plug gripper 112A, 112B on each side of the edge of the plate. These plug grippers 112A, 112B allow the mobile robot 100 to disconnect and reconnect a target server tray 128. The plate 108 is configured to align to a position of the target server tray 128 in the server rack. The plate 108 is moveable in a Z direction and can translate linearly along the first axis. The plate 108 is movable in a Y direction and can translate linearly along the second axis to extend towards the server rack and then retract inwards towards the robot 100.

The robot 100 may include one or more cameras 110 to position the robot relative to the target server tray 128 before the telescoping server loading tray 104 is extended towards the rack housing the target server tray 128 for extraction and insertion.

The robot 100 can also include safety sensors 126A, 126B on external ends of the robot. The safety sensors 126A, 126B are configured to receive sensor data about the path for the robot 100. Sensor data can include lidar data, radar data, pressure data, sound data, and so on. The robot 100 can determine the presence of obstacles in its path and take action to navigate around the obstacles while moving around the datacenter. The robot 100 can move, for example, using wheels, tracks, treads, rails, or any mechanisms for moving across a datacenter floor.

The robot 100 retrieves and stores server trays at a staging or storage location (not shown). The robot 100 loads server trays onto a server storage shelf 102 within the robot 100. In some examples, the robot 100 can navigate around aisles in the datacenter following a path provided by coordinate information or a model received of the datacenter. The robot is configured to navigate to the side of a rack from which a server tray may be removed, e.g., the frontside of a rack or the side of the rack facing the cold aisle of the datacenter.

The robot may visit multiple server racks and complete the server tray extraction and replacement process a number of times before returning to the staging area. The central staging area may be a dedicated space within the datacenter, or somewhere else physically accessible by the mobile robot 100, e.g., in a different room of the same or another building. Further, the robot may visit multiple staging areas to pick up and drop off server trays. The robot 100 may include self-docking and self-charging features that allow for a fully automated server handling system.

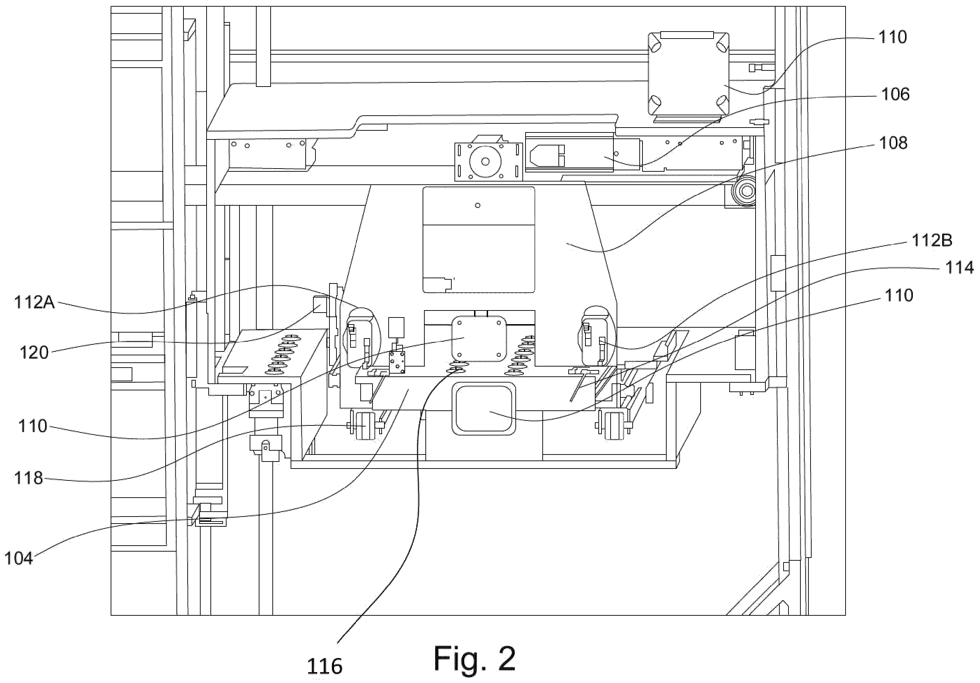

Fig. 2 is a front view of the example mobile robot 100 of Fig. 1, according to aspects of the disclosure. As described herein, the robot 100 can be configured to use a laser sensor 114 to align the telescoping server loading tray 104 to the target server tray, as well as to extend a telescoping extender 118 to align the replacement server tray to the correct position for insertion into the tray. The telescoping server loading tray 104 transitions vertically in the Z direction within the mobile robot 100 to reach each individual shelf within the storage shelf 102 of the robot. The telescoping server loading tray 104 is fixed to a first axis and the telescoping server loading tray is configured to linearly translate along the first axis within the mobile robot 100 in a Z direction. The replacement server tray can be engaged by the unlocking or locking latch 120 as the telescoping extender 118 extends the telescoping server loading tray 104 with the replacement server tray into the rack, the robot 100 can disengage the unlocking and locking latch 120 to unlock the replacement server tray and retract the telescoping extender 118. The telescoping server loading tray 104 may include a roller ball assembly 116 configured to facilitate extraction and retraction of the server trays. In some examples, the roller ball assembly 116 may be automated.

The cable handler 106 linearly translates in the YZ direction, e.g., along the Y direction and/or along the Z direction, until the plug grippers 112A, 112B are positioned relative to the cable connectors in the existing server, for example such that the plug grippers 112A, 112B are close enough to engage with the cable connectors. Using the plug grippers 112A, 112B, the robot 100 pulls on cable connectors plugged into the server to clear the server tray for extraction. For example, the server may be connected to the rack or another device through a connector. The robot 100 first locates the connector on the server for example using camera 110. The robot 100 can disconnect the connector from the server using the plug grippers 112A, 112B. The grippers 112A, 112B may be configured for disconnecting specific types of connectors, for example a quad small form factor pluggable (QSFP) connector, although the server may have a number of different types of connectors. After the cable handler 106 inserts or removes cables from the server tray, the cable handler translates upward in the Z direction over the first axis to allow the telescoping server loading tray 104 access to the server tray in the server rack.

After coupling to the server tray using the unlocking and locking latch 120, the telescoping extender 118 retracts the telescoping server loading tray 104 back into the storage shelf 102. The roller ball assembly 116 facilitates the server loading tray 104 in retracting the server tray and fully seating the server tray within the server loading tray. The telescoping server loading tray 104 will then move in the Z direction along the first axis to position level with an available shelf of shelves 103A-103G of the storage shelf 102. Then, the roller ball assembly 116 may be automated to switch the direction of rotation to rotate towards the storage shelf 102 and push the server tray from the telescoping server loading tray 104 to an available shelf of shelves 103A-103G of the storage shelf 102.

A shelf is considered available if the shelf is not currently storing a server tray, e.g., a server tray with a server targeted for replacement, repair, or upgrade, or a replacement server tray for inserting into a rack. The robot 100 can maintain data indicating the availability of the various shelves, for example based on sensor data from sensors (not shown) on each shelf indicating whether a shelf is occupied. Example sensor data that can be collected can include lidar, radar, pressure/weight sensor data, or any other type of data for determining whether a space is occupied. The telescoping server loading tray 104 translates along the first axis in the Z direction to the same plane as an available shelf, e.g., shelf 103A as in Fig. 1. The roller ball assembly 116 can then translate the loaded server tray off of the telescoping server loading tray 104 into the space of the available storage shelf 103A.

The robot 100 can perform the preceding steps in reverse to load a replacement server tray into the rack. For example, a replacement server tray may be stored on another shelf of the storage shelf 102. The telescoping server loading tray 104 translates in the Z direction until reaching the same plane as the shelf storing the replacement server tray. The roller ball assembly 116 can translate the replacement server tray from the shelf onto the telescoping server loading tray 104. The telescoping server loading tray 104 again translates in the Z direction to lower or raise the telescoping server loading tray 104 to the same plane as where the replacement server tray is to be inserted into the rack.

The robot 100 can include one or more sensors and a camera 110 for localized positioning of the robot 100 relative to the target server tray. The robot 100 can adjust its position, e.g., using wheels, treads, or tracks, to match the telescoping server loading tray 104 with the target server tray in the rack. Once in front of a server rack, the robot 100 locally adjusts itself to position the telescoping server loading tray 104 relative to the target server tray in the X and Y direction within an accuracy range, for example within +/- 10 mm. The robot 100 can further adjust itself to position the telescoping server loading tray 104 relative to the target server tray using distance sensors such as laser sensors 114, e.g., to an accuracy of +/- 2 mm in the Y direction and +/- 10 mm in the X direction. Additionally, the robot 100 can adjust itself to position the telescoping server loading tray 104 relative to the target server tray using the camera 110 in both the X and Y direction, for example within an accuracy range of +/- 2 mm. The telescoping server loading tray 104 also can move vertically in the Z direction within the robot 100 to adjust its position relative to the target server tray, for example within an accuracy range of +/- 2 mm.

After inserting the replacement server tray, the robot 100 is configured to reattach disconnected cables. As shown in Fig. 2, the robot 100 may include a laser positioning device 114. The robot 100 uses the laser positioning device 114 to line up with two targets located on either end of a side of the server tray. The targets (not shown) may be on the side of the server tray exposing cable ports to which the cable connectors can be connected. The targets are used for laser measurement to align the robot 100 with the server tray for cable insertion. For example, the robot 100 can track the relative location of various ports on a server tray relative to the fixed positions of the targets. The targets may be, for example, fiducial marks, such as special symbols, stickers, paint marks, and so on.

In some examples, the robot 100 can physically align and adjust itself with the server rack for cable insertion in other ways, e.g., using a specially-designated marker on the datacenter floor. Once the robot 100 is aligned with the server tray, the robot inserts the connectors into a server within the server tray using the plug grippers 112A, 112B. In some examples, the robot may search for fiducial marks along the server tray to align the plug grippers 112A, 112B on the cable handler 106 with the cable connectors to insert each cable. When disengaging the server tray from the server rack, the robot may search for the same fiducial marks to disengage the cables in the appropriate locations along the server.

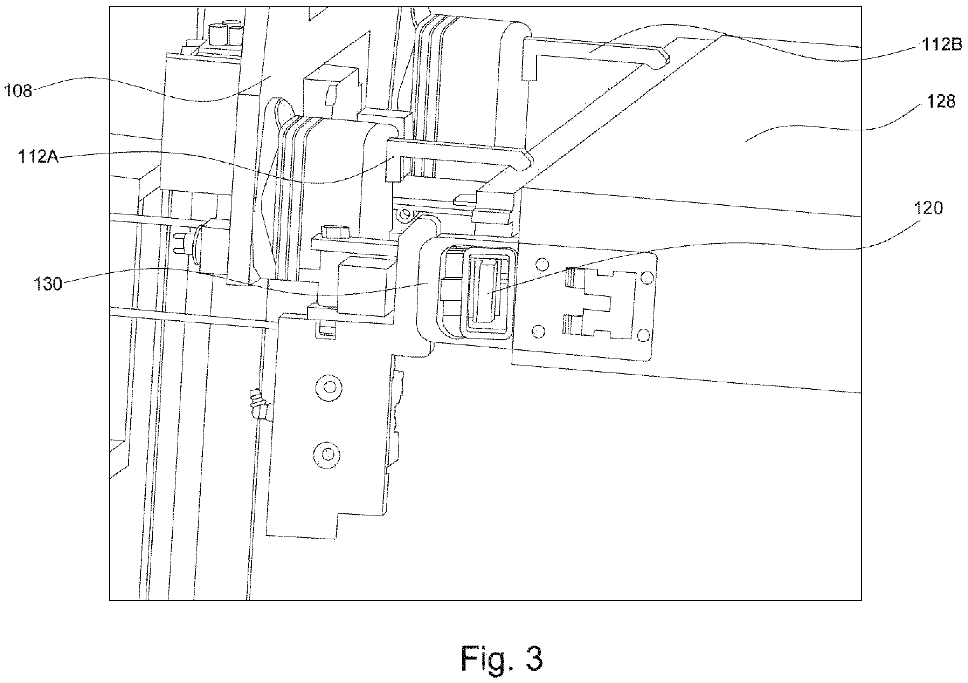

Fig. 3 is a perspective view of the mobile robot 100 of Fig. 1 engaging a server tray 128, according to aspects of the disclosure. As shown in Fig. 3, the unlocking and locking latch 120 may allow for a locking mechanism and unlocking mechanism during server tray extraction, placement, and removal, so that the robot 100 may secure itself to the target server tray 128. The unlocking and locking latch 120 may lock with a hook 130 on one end of an outer wall of the target server tray 128, with another latch latching on the opposite end (not shown). The robot 100 can be configured to engage or disengage the latch 120, e.g., using a motor or an actuator coupled to a microcontroller or other processing unit. The telescoping extender 118 coupled to the telescoping server loading tray 104 extends externally from a fixed point in the storage shelf 102 of robot 100 in the Y direction towards the server rack. Once the telescoping server loading tray 104 is fully extended, the robot latches and locks onto the server tray in the server rack, using the latch 120. The telescoping server loading tray 104 retracts into the robot, pulling the locked target server tray 128 on the telescoping server loading tray 104. The telescoping server loading tray 104 can move vertically in the Z direction in order to store the extracted target server tray 128 on an empty shelf of the server storage shelf 102 within the robot 100.

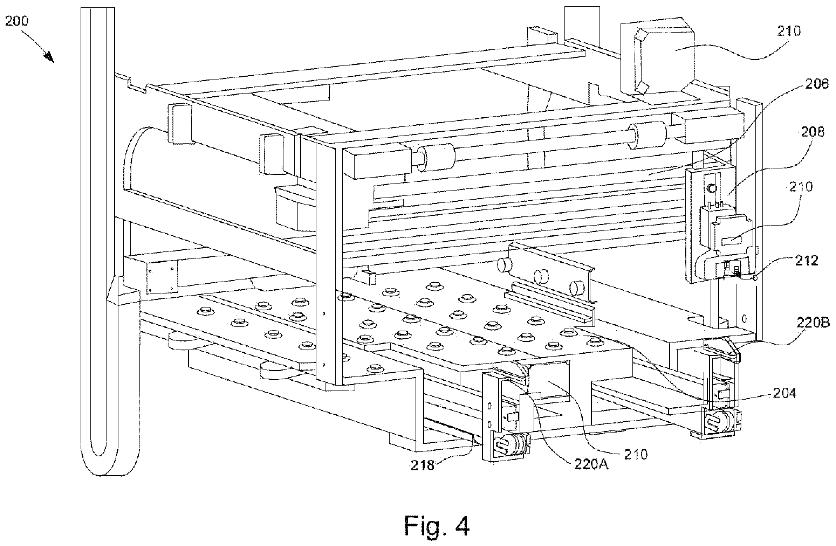

Fig. 4 is a perspective view of another example mobile robot 200, according to aspects of the disclosure. Robot 200 may be implemented like robot 100, with some differences noted in regard to the telescoping server loading tray 204 and the cable handler 206 as described below. The robot 200 includes a telescoping server loading tray 204 having unlocking and locking latches 220A, 220B. The unlocking and locking latches 220A, 220B extend from each side of an end of a telescoping extender 218 and pivot about a point to engage or disengage the server tray (not shown). Additionally, as shown in Fig. 4, the robot 200 includes a single plug gripper 212 on a plate 208 of cable handler 206 near a camera 210. The cable handler 206 may move on a first axis and a second axis. The cable handler 206 may move side to side in the X direction along the first axis. The cable handler 206 may extend externally from the robot 200 and retract back towards the robot in the Y direction along the second axis.

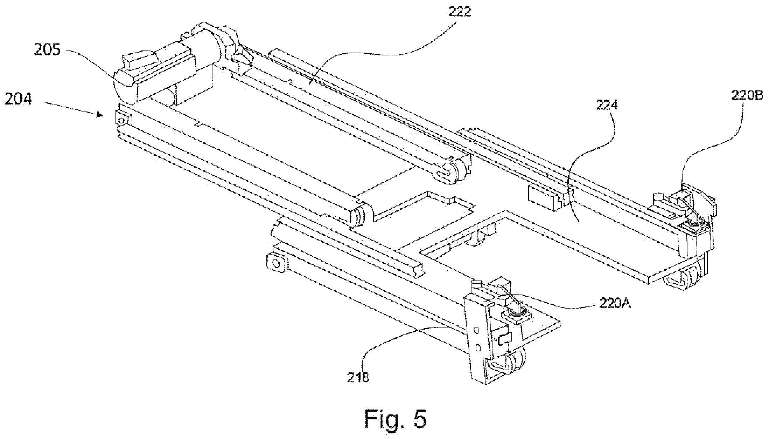

Fig. 5 is a perspective view of the telescoping server loading tray 204 of the mobile robot 200 of Fig. 4, according to aspects of the disclosure. The mobile robot 200 has a telescoping server loading tray 204 including a base portion 222 fixed to the robot, and a telescoping extender 218 and unlocking and locking latches 220A, 220B that extend externally from the base portion 222 of the telescoping server loading tray 204. The base portion 222 can be, for example, rails slidably coupled to the telescoping server loading tray 204 through the telescoping extender 218. The base portion 222 of the telescoping server loading tray 204 remains within the mobile robot 200, while the telescoping extender 218 extends outward from the robot 200 during the extraction and insertion process. The telescoping extender 218 includes a server support tray 224 to hold a server tray during extraction and insertion. Components of the telescoping server loading tray 204 can be actuated or moved using motor 205. Motor 205 can be coupled to a microcontroller or other processing unit (not shown) configured to receive data, e.g., signals or sensor data, and cause the motor 205 to actuate the telescoping server loading tray 204 in response to the signals or sensor data.

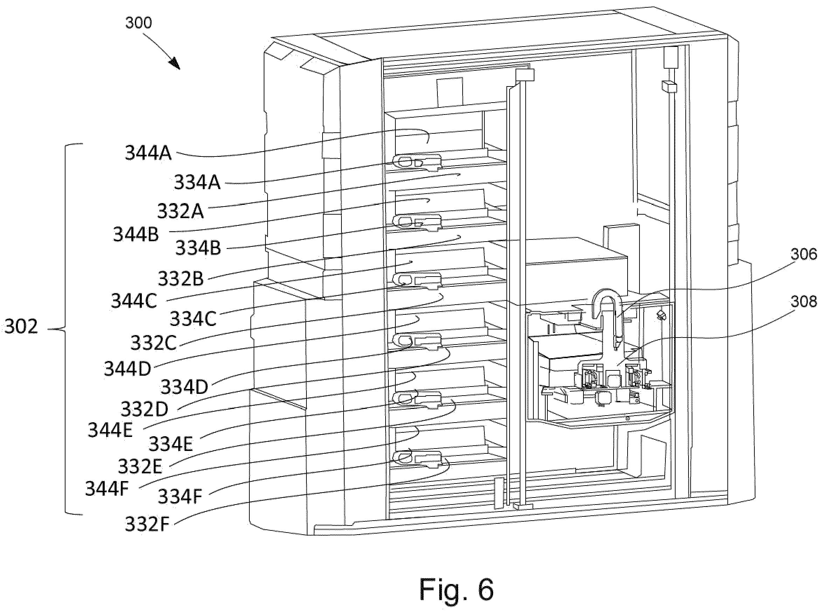

Fig. 6 is a perspective view of another example mobile robot 300, according to aspects of the disclosure. The mobile robot 300 may be implemented and used as described herein with other examples robots, e.g., the robot 100 or robot 200. In some examples, as shown in Fig. 6 the robot 300 includes a server storage shelf 302 having individual shelves 332A-332F. Each individual shelf of the shelves 332A-332F may store one or more server trays 344A-344F. In some examples, each individual shelf of the shelves 332A-332F is sized to accommodate server trays of varying sizes. Additionally, each individual shelf of the shelves 332A-332F may include a motor 334A-334F.

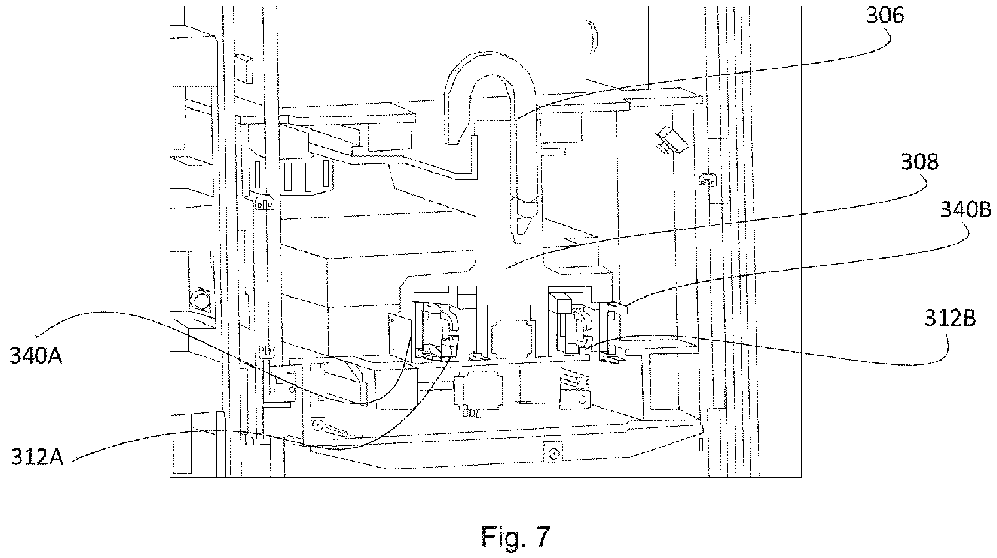

Fig. 7 is a perspective view of the mobile robot 300 of Fig. 6, according to aspects of the disclosure. In some examples, the robot 300 may include a cable handler 306 having a plate 308 which includes plug grippers 312A, 312B and cable bracket grippers 340A, 340B. The plug grippers 312A, 312B are configured to connect and disconnect individual cables from the server tray. The cable bracket grippers 340A, 340B are configured to remove and reinsert a cable bracket positioned on a side of the server tray. In some examples, the cable bracket grippers 340A, 340B may remove the cable bracket and hold the bracket in a fixed position over the server loading tray 304 as the server tray is removed and a new server tray is inserted into the server rack.

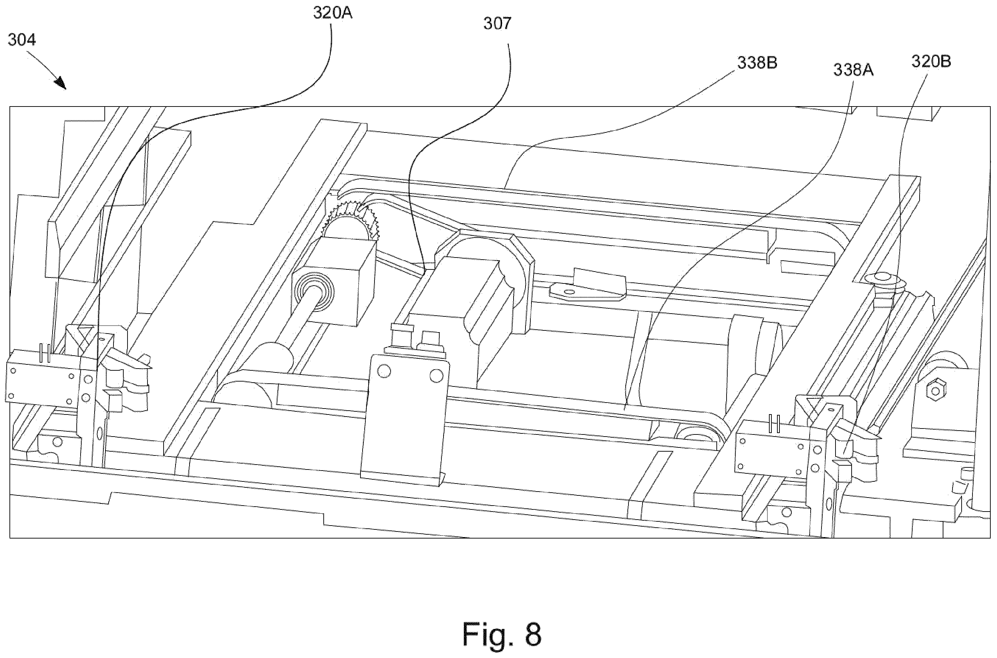

Fig. 8 is a perspective view of the telescoping server loading tray 304 of the mobile robot 300 of Fig. 6, according to aspects of the disclosure. In some examples, the server loading tray 304 includes conveyor belts 338A, 338B and unlocking and locking latches 320A, 320B. The unlocking and locking latches 320A, 320B are similar to unlocking and locking latches 220A, 220B. The conveyor belts 338A, 338B assist the server loading tray 304 in extracting and retracting server trays from the server rack and the storage shelf. The conveyor belts 338A, 338B may linearly translate a server tray using a motor 307. In some examples, the conveyor belts 338A, 338B may facilitate the extraction of the server tray from the server rack by rotating in the Y direction to pull the server tray into the telescoping server loading tray 304. After the server tray is secured in the telescoping server loading tray 304, the conveyor belts 338A, 338B may then rotate using the motor 307 to be positioned to rotate in the X direction. Once the conveyor belts 338A, 338B are positioned in the X direction they can rotate to push the server tray towards the storage shelf 302 to engage a separate conveyor system within the storage shelf. The server tray insertion process works in reverse to the server tray extraction process described above.

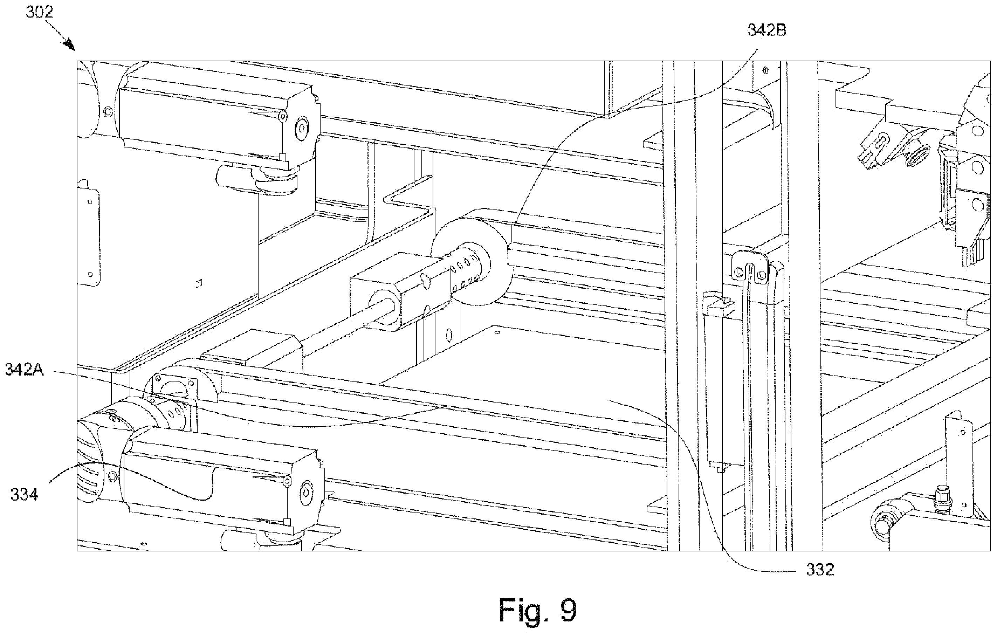

Fig. 9 is a perspective view of a server storage shelf 302 of the mobile robot 300 of Fig. 6, according to aspects of the disclosure. In some examples, the server storage shelf 302 of the robot 300 may include an individual shelf 332 having conveyor belts 342A, 342B. The conveyor belts 342A, 342B allow the robot to store and extract server trays from each individual shelf 332 of the storage shelf 302. For example, when a server tray is loaded and the server loading tray 304 is raised to the same plane as an available server shelf, the robot 100 can actuate the conveyor belts 342A, 342B using a motor 334, to linearly translate the loaded server tray into the available shelf. The conveyor belts 338A, 338B of the server loading tray 304 may push the server tray towards the conveyor belts 342A, 342B of the storage shelf 302 until the server tray is engaged by the conveyor belts 342A, 342B and is pulled onto the storage shelf 302.

### Position Verification Tool

Aspects of the present disclosure relate to a position verification tool used to measure and verify the coordinates of individual server racks within a datacenter. Even within datacenters designed and built according to the same plan or schematic, the exact positions of the racks can vary from datacenter to datacenter. As a result, additional measurements may be needed for determining the relative position of a rack within a datacenter. These variations in the positions of racks relative to an established plan or schematic may be due to variations in the datacenter introduced during construction, different types or datacenter equipment being used, with respective different dimensions, and/or due to slight variations in the positions of datacenter racks when installed in different datacenters.

Server rack locations may slightly vary from the designed infrastructure on a computer-aided design program. Further, server racks may be reorganized during the life of a datacenter. As such, it is important to maintain and verify positions of datacenter server racks after the datacenter is constructed. In particular, cable length relies heavily on precise server rack coordinates and measurements of server rack spacing. Restricting cable length reduces expenses and hazards and improves efficiency. Proper rack cabling further aids in the efficiency of an automated server handling system. A mobile robot may receive these verified rack coordinates for navigating to a rack housing a target server tray.

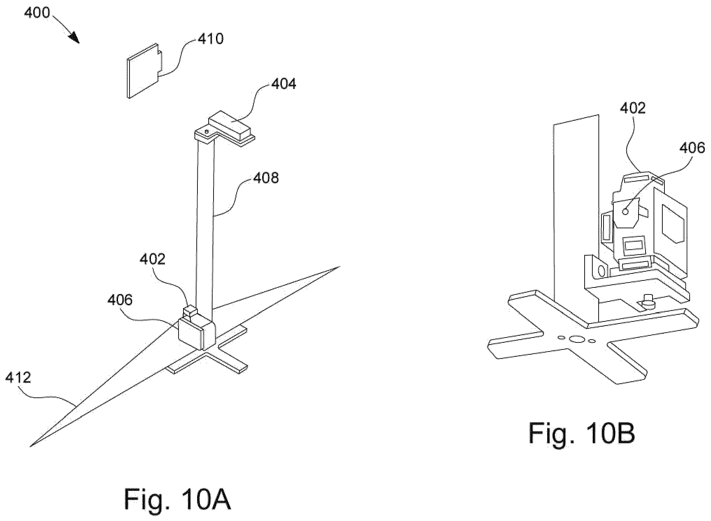

As shown in Figs. 10A and 10B, the position verification tool 400 includes an aligning laser 402 and a distance measurement laser 404. The tool 400 also includes a support fixture 408 which connects the aligning laser 402 and the distance measurement laser 404. The tool 400 may also include a laser limiting shield or laser shield 406 fixed to the aligning laser 402. Lastly, the position verification tool 400 includes a laser target 410 that is removably coupled to a second location separate from the tool itself. The laser target 410 can be removably coupled to a rack for determining the distance between the tool 400 and the rack.

Fig. 10A is a perspective view of the example position verification tool 400, according to aspects of the disclosure. In further detail, the position verification tool 400 includes a distance measurement laser 404 configured to measure the distance of a server rack relative to multiple reference points on which the tool 400 is aligned. The aligning laser 402 can align the tool 400 relative to a reference point in a datacenter aisle.

Fig. 10B is a perspective view of the aligning laser 402 of the position verification tool 400 of Fig. 10A, according to aspects of the disclosure. The position verification tool 400 may also include a laser shield 406 adjacent to the aligning laser 402. The laser shield 406 can limit the range of a laser spread 412 of the aligning laser 402 to one particular row or the width of one aisle in the datacenter. Limiting the scope of the aligning laser may improve accuracy of the position verification tool 400.

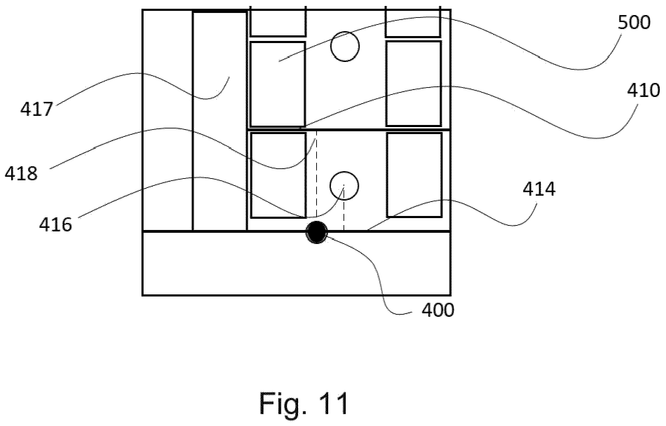

Fig. 11 is a diagram illustrating a measurement window of the position verification tool 400, according to aspects of the disclosure. As shown in Fig. 11, the position verification tool measures the location of a rack 500 in a datacenter with reference to a datum point 414 (also referred to as a "first reference point"). The datum point 414 may serve as a physical reference point, such as the lip of the server aisle at the start of a row of server racks. The datum point 414 may not be limited as such and any concrete reference point in the datacenter that is not moved during reorganization may be used as a datum point by the position verification tool 400. The datacenter may be split into multiple sections depending on the size of the datacenter, each section containing a group of server racks. The datum point is reestablished when the position verification tool 400 is moved from one section to the next. The position verification tool 400 may use the same relative datum point for every aisle in a single section, e.g., a lip of an aisle. The position verification tool 400 may use a marker 416 fixed along the floor of the datacenter to localize the position of the position verification tool with regard to the datacenter before the position of the server rack is determined. In some examples, one or more markers will be placed in equally spaced increments along the datacenter floor so the position verification tool can localize itself at various locations throughout the datacenter.

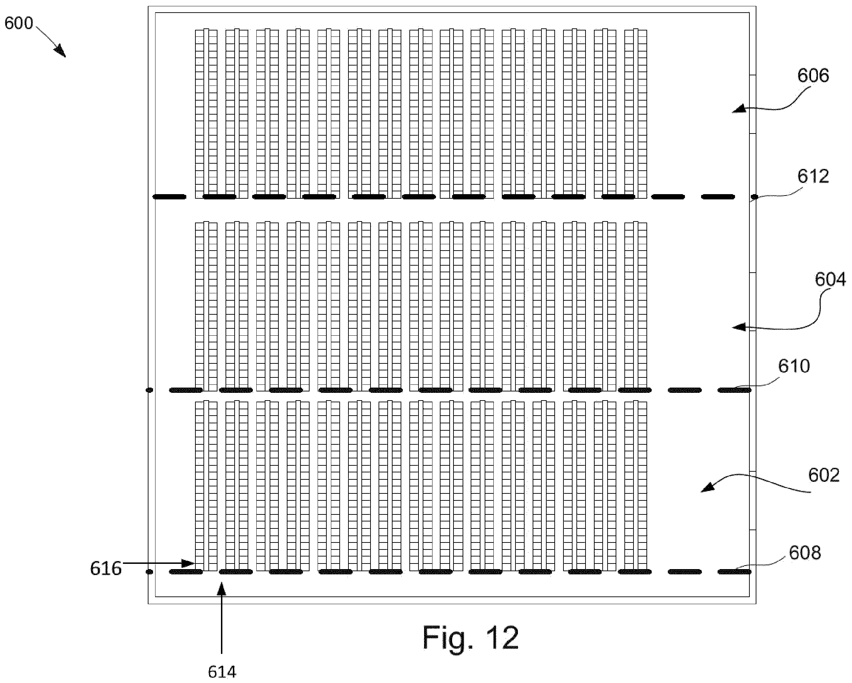

Fig. 12 is a diagram illustrating an example datacenter 600 sectioned for use with the position verification tool 400 of Fig. 10A, according to aspects of the disclosure. The datacenter 600 may be split into a first section 602, a second section 604, and a third section 606. The first section 602 has a first datum point 608, the second section 604 has a second datum point 610, and the third section 606 has a third datum point 612. For example, the datum point 608 is located at the start of a first row of server racks 616 in the first section 602. Each aisle 614 in the first section 602 uses the first datum point 608.

A second reference point allows the position verification tool to align itself relative to a server aisle and the datum point. The tool 400 can be positioned such that the laser spread 412 of the aligning laser 402 lines up with the edge of a plenum 417 or other reference point. The tool 400 itself can be positioned along or at the first reference point. The second reference point may be the edge of a concrete base pad of a plenum in or along the server aisle. Most datacenters have a concrete base pad for a return plenum in each aisle, which can be used as a consistent point to use as reference. The second reference point may be any consistent feature that is used throughout each aisle of the datacenter. Each aisle in a datacenter must be aligned individually in reference to a plenum in each aisle. The inner aisles of a datacenter may have plenums on one or more sides of each server rack.

The third reference point may be a target, e.g., target 410, placed on server rack 500 itself. The target 410 can be attached onto an edge of the rack. The distance measurement laser 404 sends the laser out to measure the distance between target 410 and the tool 400. Each rack is measured individually, and the target is moved between each measurement, e.g., automatically or manually. The rack coordinates are verified with reference from the target 410 on the rack to the first and second reference points.

As shown in Fig. 11, the position verification tool 400 can measure an enclosure offset 418 from the datum point 414 and the plenum in the horizontal and vertical direction to verify the coordinates of a rack location 500. In particular, the position verification tool 400 measures the offset distance of each individual server rack in an aisle from tool 400 positioned relative to the first and second reference point, with reference to the target 410 on the edge of the server rack.

The position verification tool records measurements, which may be saved within a database. The database holds various coordinates for each rack, which then may be sent using a network to a robot or other computing device. In some examples, the robot may receive the position verification tool database to identify individual rack locations in a datacenter. The robot can be configured to navigate to a position in the datacenter indicated by a coordinate.

While the position verification tool may be used to verify rack positions for the automated server handling system, the position verification tool may be used in various other processes requiring position verification and storing of large number of coordinates in a database system, e.g., for modeling a datacenter or generating a digital twin for the datacenter.

### Rack Modeling Tool

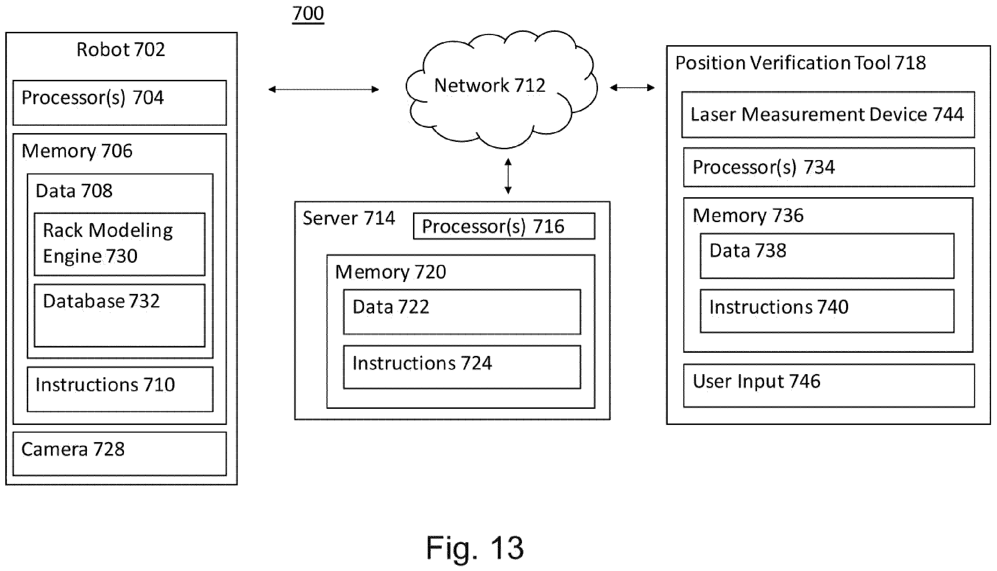

Fig. 13 illustrates an example system 700 in which the features described above may be implemented. It should not be considered limiting the scope of the disclosure or usefulness of the features described herein. In this example, the system 700 may include a robot 702, a server 714, and a network 712. The robot 702 may include a mobile robot used to complete an automated server handling process. The robot 702 may include one or more processors 704 and a memory 706. The memory 706 of the robot 702 includes data 708 and instructions 710. The data 708 may include a rack modeling engine 730, e.g., at least partially implementing a machine learning model or a visual system that can create a 3D visualization of a datacenter server rack. Data 708 may further include a database 732 of coordinates of each server rack in the datacenter, e.g., generated using position verification tool 718. The instructions 710 allow the robot 702 to navigate the datacenter to complete automated server handling. The data 708 allows the robot 702 to identify which server 714 housed in a server tray in each rack of the datacenter requires maintenance.

The rack modeling engine 730 can be a combination of software and hardware configured for identifying target server trays on a designated server rack. A rack modeling engine can be implemented by a robot, e.g., a mobile robot as described herein for automated server handling. In some examples, the rack modeling engine 730 is implemented on a server, e.g., server 714, configured to receive sensor data from robot 702 over network 712, and to provide signals to the robot 702 for causing the robot to identify and retrieve a target server tray from a designated rack.

The rack modeling engine 730 maintains or has access to three-dimensional (3D) models of racks implemented in a datacenter. The rack modeling engine 730 receives, as input, a 3D model of a rack and a coordinate corresponding to a designated rack. The designated rack is a rack containing a target server tray, which the robot 702 may be tasked with retrieving, for example as described herein with reference to Figs. 1-9. A separate system may be configured for determining the target server tray and corresponding designated rack. For example, the system 700 may include a diagnostic or datacenter monitoring system (not shown) configured to track telemetry data, or other types of data related to operation of servers in a datacenter.

When the monitoring system determines a potential issue, e.g., a server is slated for upgrade, the server is offline, the server is transmitting data outside of tolerated thresholds, etc., the monitoring system can determine the coordinates of the rack corresponding to the tray and provide the coordinates to the robot 702. The robot 702 is configured to navigate to the general location of the designated rack, based on the coordinates provided. For example, the robot 702 may be configured to determine a path from its current location to coordinates received for the location of a designated rack. The robot 702 can navigate along the path using a combination of various sensors, e.g., cameras, laser sensors, radar sensors, etc., to avoid obstacles along the path. The datacenter may have fiducial markers, for example in the form of brightly colored lines, indicating safe paths for the robot 702 to use in navigating to the designated rack. The robot 702 can be configured to receive image data of various other markers, signs, or indicators in the datacenter provided to facilitate navigation by the robot 702.

The coordinates received by the rack modeling engine 730 may be obtained using the position verification tool 718, for example as described with reference to Figs. 10A-12. Coordinates recorded by the tool 718 can be uploaded to the database 732, which can be sent to the rack modeling engine 730. In some examples, the coordinates for a designated rack may be predetermined, hard-coded, and/or provided through user input. The coordinate may be relative to a reference point, e.g., the third reference point described with reference to Fig. 11.

The rack modeling engine 730 is configured to determine positions of various elements of a rack, relative to the coordinates provided as input. For example, a 3D model for the rack modeling engine 730 can specify exact measurements for a rack, including the positions of various components, such as ports, ends of a server, etc., relative to a point relative to the rack. Relative to the position indicated by the coordinates, the robot 702 can identify any other part of a rack using the 3D model as a reference. To that end, the robot 702 can determine, for example, the center of the rack, or the relative position of the target server tray, if for example the target server tray.

For example, the target server tray may be specified as the third server tray in a rack. After navigating to the designated rack, the robot 702 can take images of the rack for aligning to a position relative to the rack, using the 3D model. The robot 702 can then cause its telescoping server tray to be translated in the Z direction needed to align with the target server tray.

The rack modeling engine 730 may implement a machine learning model or another technique for performing image segmentation to identify various components of a rack. The engine 730 can receive input data including images or video of a camera feed of the camera 728 and use the input data to generate predictions of the locations of the various components of a designated rack or target server tray. For example, the engine 730 can implement a convolutional neural network or other machine learning model for predicting segments of an image. The processor 704 can be configured to cause components of the robot 702 to move to perform server extraction, replacement, and so on.

Memory 706 of the robot 702 can store information accessible by the one or more processors 704, including instructions 710 that can be executed by the one or more processors 704. Memory 706 can also include data 708 that can be retrieved, manipulated, or stored by the processor. The memory 706 can be of any non-transitory type capable of storing information accessible by the processor, such as a hard-drive, memory card, read-only memory ("ROM"), random access memory ("RAM"), optical disks, as well as other write-capable and read-only memories. Memory 706 may store information that is accessible by the processors 704, including instructions 710 that may be executed by processors 704, and data 708.

The instructions 710 can be any set of instructions to be executed directly, such as machine code, or indirectly, such as scripts, by the one or more processors. In that regard, the terms "instructions," "application," "steps," and "programs" can be used interchangeably herein. The instructions can be stored in object code format for direct processing by a processor, or in any other computing device language including scripts or collections of independent source code modules that are interpreted on demand or compiled in advance.

Data 708 may be retrieved, stored, or modified by the one or more processors 704 in accordance with the instructions 710. For instance, although the subject matter described herein is not limited by any particular data structure, the data can be stored in computer registers, in a relational database as a table having many different fields and records, or XML documents. The data can also be formatted in any computing device-readable format such as, but not limited to, binary values, ASCII, or Unicode. Moreover, the data can include any information sufficient to identify the relevant information, such as numbers, descriptive text, proprietary codes, pointers, references to data stored in other memories such as at other network locations, or information that is used by a function to calculate the relevant data.

The one or more processors 704 may include any conventional processor, such as a CPU or microprocessor. Alternatively, the processor can be a dedicated component such as an ASIC or other hardware-based processor, such as a tensor processing unit (TPU). Although not necessary, the server 714 may include computing devices that include specialized hardware components to perform specific computing functions faster or more efficiently.

Although Fig. 13 functionally illustrates the processor, memory, and other elements of the robot 702 as being within the same respective blocks, it will be understood that the processor or memory may actually include multiple processors or memories that may or may not be stored within the same physical housing. Similarly, the memory may be a hard drive or other storage media located in a housing different from that of the robot 702. Accordingly, references to a processor or server will be understood to include references to a collection of processors or servers or memories that may or may not operate in parallel.

System 700 further includes the position verification tool 718. The position verification tool 718 may include a laser measurement device 744, a processor 734, and a memory 736. The memory 736 may include data 738 and instructions 740. The processor 734 and the memory 736 may receive user input 746 to take measurements using the position verification tool 718. The user input 746 may include the determination of a first, second, and third reference point. Then, the processor may store coordinates relating to the measurements taken by the position verification tool 718 in the memory 736. Such coordinates may be stored as a database. The instructions 740 may include offset calculations from the reference points used to calculate relative coordinates of each server rack using the position verification tool 718. The position verification tool 718 may use the user input 746 in order to generate data 738 regarding relative coordinates of each server rack in the datacenter. The processors 734 may communicate the data 738 through the network 712 to the server 714 and which may then send the data to the robot 702. Processor 734, memory 736, data 738, and instructions 740 of the position verification tool 718 can be structurally and functionally similar to above disclosed processors 704, memory 706, data 708, and instructions 710 of the robot 702.

System 700 further includes the server 714 utilized to provide data 722 to the robot 702 through the network 712. The server 714 may include a processor 716 and a memory 720. The memory 720 may include data 722 and instructions 724. The data 722 may include the database of coordinates measured by the position verification tool 718.

Processor 716, memory 720, data 722, and instructions 724 of the server 714 can be structurally and functionally similar to above disclosed processors 704, memory 706, data 708, and instructions 710 of the robot 702. The processors 704 can be configured for receiving and sending signals to various components of the robot 702, including motors, actuators, etc., for causing the various components to extend, retract, translate in an XYZ direction, and so on.

As shown in Fig. 13, the robot 702 may be intended for use by a respective user, and have all of the components normally used in connection with a computing device including one or more processors (e.g., a central processing unit (CPU)), memory (e.g., RAM and internal hard drives) storing data and instructions, an output, such as a display (e.g., a monitor having a screen, a touch-screen, a projector, a television, or other device such as a smart watch display that is operable to display information), and user input devices (e.g., a mouse, keyboard, touchscreen or microphone). The robot 702 may also include a camera 728 for recording video streams, speakers, a network interface device, and all of the components used for connecting these elements to one another. The robot 702 may be capable of wirelessly exchanging or obtaining data over the network 712.

Although the robot 702 may include a full-sized computing device, it may alternatively include mobile computing devices capable of wirelessly exchanging data with a server over a network such as the Internet. By way of example only, robot 702 may include a mobile phone or a device such as a wireless-enabled PDA, a tablet PC, a netbook, a smart watch, a head-mounted computing system, or any other device that is capable of obtaining information using the Internet. As an example, robot 702 may receive user input from a user input device, such as a keyboard, a keypad, microphone, using visual signals with a camera, or a touch screen.

Referring back to Fig. 13, the robot 702, the server 714, and the position verification tool 718 can be at various nodes of a network 712 and capable of directly and indirectly communicating with other nodes of network 712. Although one robot 702, one server 714, and one position verification tool is depicted in Fig. 13, it should be appreciated that a system can include one or more robots, servers, or position verification tools with each robot, server, or position verification tool being at a different node of network 712. The network 712 and intervening nodes described herein can be interconnected using various protocols and systems, such that the network can be part of the Internet, World Wide Web, specific intranets, wide area networks, or local networks. The network 712 can utilize standard communications protocols, such as WiFi, Bluetooth, 4G, 5G, or any other manner of transmission or protocol.

In one example, system 700 may include one or more servers, e.g., server 714 having one or more computing devices, e.g., a server farm, that is configured to exchange information with different devices of a network for the purpose of receiving, processing, and transmitting the data to and from other computing devices. For instance, server 714 may be a web server that is capable of communicating with the one or more robots, such as the robot 702 and the one more position verification tools, such as the position verification tool 718, using the network 712. The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

In some examples, system 700 may include a robot 702 having a memory 706 having data 708 storing a machine learning program in addition to data input. The machine learning model may be used to identify the server locations in the server rack. The model can also be trained to process features corresponding to given input. Features are values, e.g., numerical or categorical, which relate to some characteristic of the input. For example, in the context of an image, a feature of the image can relate to the RGB value for each pixel in the image. A machine learning task in the image/video context can be to classify contents of an image or video, for example for the presence of different people, places, or things. Machine learning models can be trained to extract and select relevant features for processing to generate an output for a given input and can also be trained to generate new features based on learned relationships between various characteristics of input data. Machine learning models can be implemented and deployed using one or more machine learning frameworks, such as static or dynamic computational graph frameworks.

### Example Methods

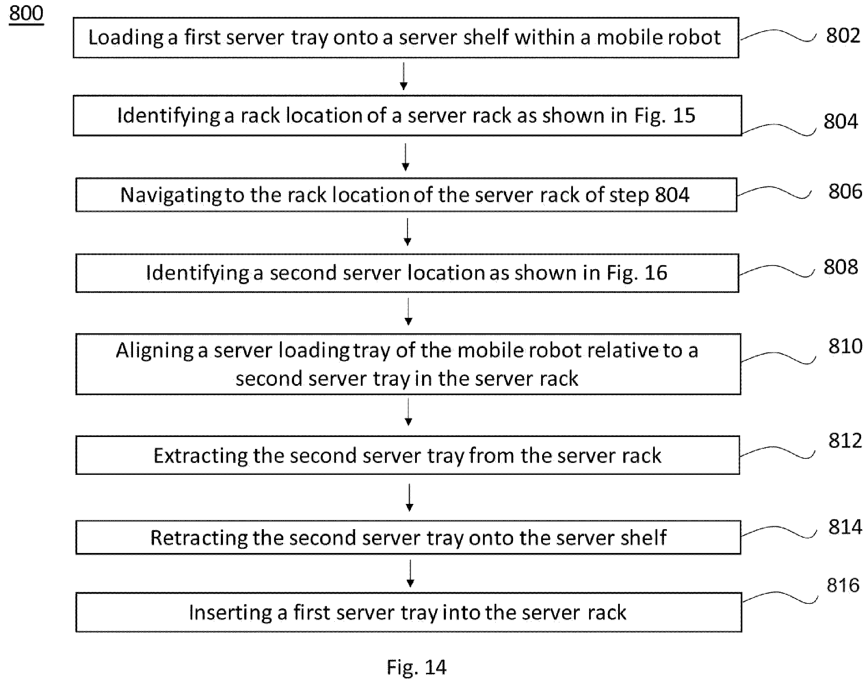

Fig. 14 is a flow diagram of an example method 800 for automated server handling, according to aspects of the present disclosure. The following operations do not have to be performed in the precise order described below. Rather, various operations can be handled in a different order or simultaneously, and operations may be added or omitted.

In block 802, a robot loads a first server tray onto a server shelf within the robot in a loading or a staging area. The robot may pick up server trays from one or more staging areas.

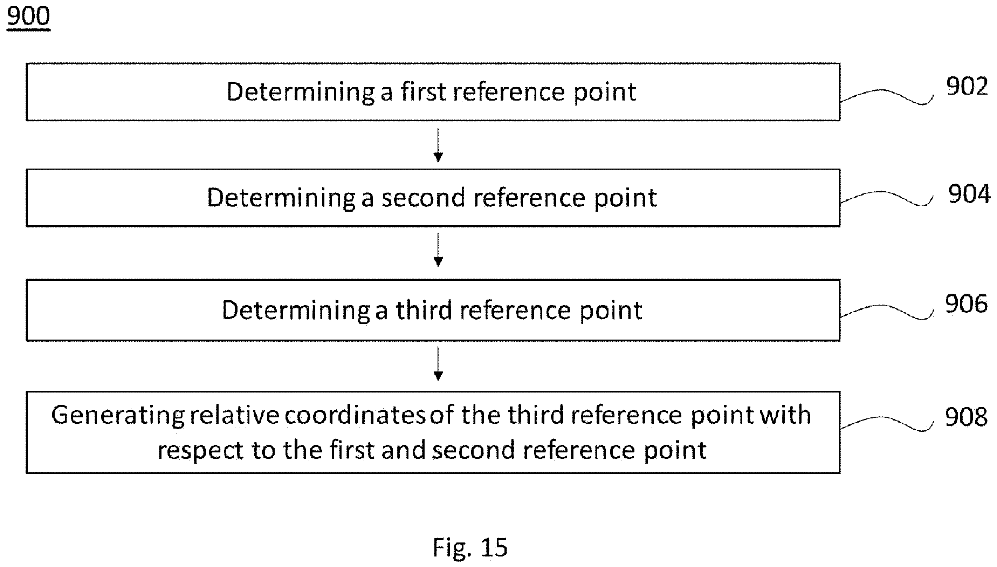

In block 804, the robot identifies a server rack location as shown in Fig. 15, which is described in further detail below. For example, the robot receives a server rack location as coordinates corresponding to a common reference point for each rack of a datacenter. The common reference point can be the edge of the rack. The server rack location can further include an indication of which server tray is the target server tray, e.g., the first server tray from the top, the third server tray from the bottom, etc.

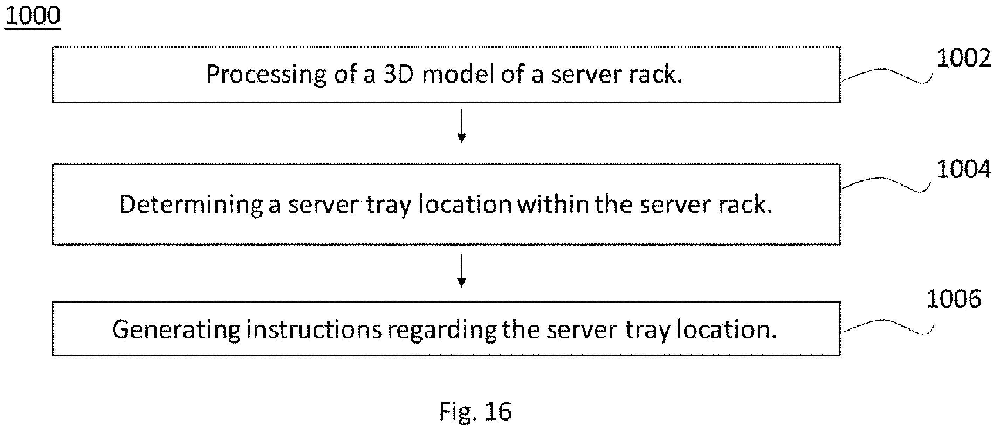

In block 806, the robot navigates to the rack location of the server rack that is identified in block 804. In block 808, the robot identifies a second server tray location as shown in Fig. 16, for example as described in further detail below.

In block 810, after the robot navigates to the server rack location and identifies the approximate second server tray location. The robot aligns itself relative to the server rack. The robot may adjust the position of the server loading tray in the Z direction to match the second server tray location within a degree of accuracy. The robot may include a camera and a sensor which allows the robot to determine the position of the second server tray.

In block 812, the robot extracts the second server tray from the server rack. In further detail, after the robot adjusts the server loading tray relative to the second server tray in the server rack, the robot extracts the second server tray. Extracting the second server tray further includes disengaging cables from a server of the second server tray using a cable handler having one or more plug grippers, for example as described herein with reference to Figs. 1-2. The plug grippers disconnect the cables from the server. Next, the robot extends a telescoping server loading tray having unlocking and locking latches towards the second server tray in the rack. The latches lock onto the second server tray in the rack. In some examples, the server loading tray may include a conveyor belt assembly configured to push and pull the server tray. In other examples, the server loading tray may include a roller ball assembly configured to push and pull the server tray.

In block 814, the robot retracts the second server tray onto the server shelf. The robot can retract the second server tray into the robot by retracting the telescoping extender of the server loading tray, for example as described herein with reference to Figs. 1-2. The server loading tray moves in the Z direction up and down along the storage shelf of the robot, to store the second server tray onto an empty shelf. In some examples, each shelf of the storage shelf may include a conveyor assembly or a roller ball assembly to assist in storing and extracting of server trays.

In block 816, the robot unloads or inserts the first server onto the server rack. After the robot extracts and stores the second server on an empty shelf. The robot then identifies the first server tray stored on the storage shelf. The server loading tray moves in the Z direction to be adjacent to the first server tray on the storage shelf and loads the first server tray on the storage shelf using the conveyor or roller ball assembly. Then the server loading tray realigns with the empty rack shelf that held the second server tray. After the robot realigns with the empty rack shelf the robot pushes the first server tray onto the empty rack shelf using the telescoping server loading tray. The server loading tray retracts back into the mobile robot and the cable handler grippers reattach the cables of a server of the first server tray to complete the server replacement process.

Fig. 15 is a flow diagram for an example method 900 of a position verification tool verifying the location of the rack. As described herein with reference to Figs. 10A-12, the position verification tool can be used to determine coordinates for racks in a datacenter. The coordinates can be used to identify racks, generating digital twins or models of the datacenter, and/or for performing automated server handling using a mobile robot, according to aspects of the disclosure.

In block 902, the position verification tool is positioned in a datacenter section using a first reference point relative to the section. The datacenter may be split into multiple sections. The first reference point must be reestablished for each section of the datacenter. The positioning of the tool may be done, for example, manually, or using a robot or other vehicle.

In block 904, the position verification tool is aligned with a datacenter aisle using a second reference point relative to the datacenter aisle. The datacenter may include a plurality of aisles. The second reference point must be reestablished for each individual aisle in the datacenter. The second reference point may be the edge of a concrete pad for a plenum corresponding to an aisle.

In block 906, the position verification tool is aligned with a third reference point relative to a server rack in the datacenter aisle. The datacenter includes a plurality of server racks in a single aisle in a single section of the datacenter. The third reference point is reestablished for each individual server rack in each aisle of each section of the datacenter.

In block 908, the position verification tool measures relative coordinates of a server rack using the distance measuring laser. The relative coordinates are determined using the first, second, and third reference points as guidance. In particular, the tool measures the offset of the third reference point from the first and second fixed references in each aisle as the third reference is moved for each individual server rack. The relative coordinates can be uploaded or provided to another device, e.g., a server implementing a database.

Fig. 16 is a flow diagram for an example method 1000 of identifying the server tray position within the rack.

In block 1002, the robot may utilize a rack modeling engine to process a 3D model of a rack using machine learning or an internal vision system. In block 1004, the robot will then determine a server tray location within the rack using the rack modeling engine. In block 1006, the robot will generate instructions regarding the server location. The rack modeling engine provides an approximate location of each server tray within the rack.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "configured" is used herein in connection with systems and computer program components. For a system of one or more computers to be configured to perform particular operations or actions means that the system has installed on it software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "database" refers to any collection of data. The data can be unstructured or structured in any manner. The data can be stored on one or more storage devices in one or more locations. For example, an index database can include multiple collections of data, each of which may be organized and accessed differently.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the implementations should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A mobile robot for automated server handling, the robot comprising:
a server shelf configured to hold a plurality of server trays;
a telescoping server loading tray configured to extend externally from the robot and retract internally inside the server shelf, the telescoping server loading tray having an end with one or more unlocking and locking latches positioned on the end of the telescoping server loading tray; and
wherein unlocking and locking latches are configured to engage a server tray.

2. The mobile robot of claim 1, further comprising a distance sensor, a camera, and one or more processors, wherein the one or more processors are configured to:
receive data from the distance sensor and the camera; and
cause the telescoping server loading tray to align a position of the telescoping server loading tray relative to a server tray in a server rack in a Z direction.

3. The mobile robot of claim 1 or claim 2, wherein the telescoping server loading tray is fixed to a first axis and the telescoping server loading tray is configured to linearly translate along the first axis within the mobile robot in a Z direction; and/or
wherein the telescoping server loading tray further comprises a rotatable conveyor belt and a motor configured to linearly translate the server tray.

4. The mobile robot of any one of claims 1 to 3, further comprising a cable handler, the cable handler having a first axis and a second axis,
wherein the cable handler includes a plate fixed to the first axis and the second axis having a gripper adjacent to an edge of the plate,
wherein the plate is configured to align to a position of a server tray in a server rack, the plate being moveable in a Z direction,
wherein the plate is configured to extend towards the server rack in a Y direction and retract inwards towards the mobile robot in the Y direction, and
wherein the mobile robot is configured to disconnect, using the cable handler, one or more connectors connected to a server.

5. A system for automated server handling comprising:
a server rack housing a plurality of server trays;
a mobile robot comprising:
a server shelf configured to house server trays;
a telescoping server loading tray adjacent to the server shelf, the telescoping server loading tray having one or more locking and unlocking latches on an end of the telescoping server loading tray; and
one or more processors;
wherein the mobile robot is configured to:
receive, by the one or more processors, data indicating a location of the server rack;
navigate, by the mobile robot, to the location;
unload, using the telescoping server loading tray, a server tray of the plurality of server trays; and
load, using the telescoping server loading tray, the server tray into the server shelf.

6. The system of claim 5, further comprising a cable handler, the cable handler having a first axis and a second axis,
wherein the cable handler includes a plate fixed to the first axis and the second axis having a gripper adjacent to an edge of the plate,
wherein the plate is configured to align to a position of a server tray in a server rack, the plate being moveable in a Z direction,
wherein the plate is configured to extend towards the server rack in a Y direction and retract inwards towards the mobile robot in the Y direction, and
wherein the mobile robot is configured to disconnect, using the cable handler, one or more connectors connected to a server.

7. The system of claim 5 or claim 6, wherein the mobile robot includes sensors and a camera configured to determine a position for unloading the server tray relative to the server rack.

8. The system of any one of claims 5 to 7, further comprising a position verification tool configured to determine coordinates of the server rack, wherein the mobile robot is further configured to receive the coordinates and navigate to the coordinates.

9. The system of claim 8, wherein the position verification tool comprises a first laser, a second laser, and a laser shield; and/or
wherein the coordinates are determined by the position verification tool using a plurality of reference points.

10. The system of any one of claims 5 to 9, wherein the mobile robot is the mobile robot of any one of claims 1 to 4.

11. A method for automated server handling comprising:
loading, by a mobile robot, a first server tray onto a server shelf located within the mobile robot;
extracting, by the mobile robot, a second server tray from a server rack using a telescoping server loading tray to support the second server tray;
retracting, by the telescoping server loading tray, the second server tray onto the server shelf of the robot; and
inserting, by the telescoping server loading tray, the first server tray into the server rack.

12. The method of claim 11, further comprising:
removing, by the mobile robot, cables from the second server tray in the server rack using a gripper located on a cable handler of the mobile robot; and
inserting, by the mobile robot, the cables into the first server tray by the gripper, and
wherein the cable handler optionally translates linearly in an YZ direction using a first axis and a second axis.

13. The method of claim 11 or claim 12, further comprising:
navigating, by the mobile robot, to the server rack; and
aligning, by the mobile robot, the telescoping server loading tray of the mobile robot relative to the server rack using a sensor; and
wherein the sensor optionally comprises one or more of a distance sensor, a camera, or a laser.

14. The method of any one of claims 11 to 13, further comprising identifying a second server tray location before extraction from the server rack; and/or
wherein the mobile robot is secured to at least one of the first server tray or the second server tray using an unlocking and locking latch located on an end of the telescoping server loading tray.

15. The method of any one of claims 11 to 14, further comprising identifying, by one or more processors, a server rack location before extraction; and
wherein identifying the server rack location optionally further comprises determining, by the one or more processors, coordinates relative to a first reference point, a second reference point, and a third reference point.
